# EUROPEAN PATENT SPECIFICATION

(11) **EP 3 271 415 B1**
(45) Date of publication and mention of the grant of the patent: **26.07.2023**
(21) Application number: 16769249.0
(22) Date of filing: 23.02.2016
(51) Int. Cl.: C08J 5/18, C08L 29/04, C08K 3/36, A41D 19/00, B32B 27/08, B32B 27/30, B32B 27/20, B32B 27/32, B32B 27/40

(54) **SOLVENT RESISTANT COMPOSITE FILM**
LÖSUNGSMITTELBESTÄNDIGE VERBUNDFOLIE
FILM COMPOSITE RÉSISTANT AUX SOLVANTS

(30) Priority: 20.03.2015 US 201562136158 P
(43) Date of publication of application: 24.01.2018
(73) Proprietor: Kimberly-Clark Worldwide, Inc., Neenah, Wisconsin 54956 (US)
(72) Inventor: DEMARCO, Alphonse, Nova Scotia B0H 1L0 (CA); WIDEMAN, Gregory J., Menasha, Wisconsin 54952 (US); STANKIEWICZ, Hubert, Woodstock, Georgia 30188 (US)
(74) Representative: Dehns
(86) International application number: PCT/US2016/019134
(87) International publication number: WO 2016/153679

(56) References cited:
- WO-A1-2013/088443
- US-A1- 2004 106 719
- US-A1- 2007 184 220
- US-A1- 2009 098 395
- US-A1- 2012 047 626
- US-A1- 2012 047 626
- US-A1- 2013 104 286
- US-A1- 2013 143 053
- US-A1- 2014 170 344

## Description

### BACKGROUND

Articles such as gloves are often formed from synthetic polymers. Unfortunately, one problem sometimes associated with the formation of polymeric articles from some types of synthetic polymers is that they tend to allow vapors to pass therethrough when contacted with certain chemicals or solvents. This effect of the polymer can be especially problematic when used in certain fields, such as in the aviation, medical, and automotive field.

As such, a need currently exists for improved composites and articles that are relatively resistant to various types of chemicals or solvents.
US 2009/098395 discloses barrier coatings for use on thermoplastic films.
US 2012/047626 discloses a seamless, form-fitting glove having improved comfort and chemical permeation resistance and a method of manufacture.
WO 2013/088443 discloses a biodegradable sheet prepared from biodegradable material comprising a gas barrier material, wherein the gas barrier material may be a nanoclay and/or polyvinyl alcohol.
US 2013/104286 discloses an elastic article, such as a glove, made from a thermoplastic elastomer film.
US 2012/047626 discloses a seamless, form-fitting glove having improved comfort and chemical permeation resistance and a method of manufacture.
US 2014/170344 discloses a multi-layer sheet structure having moisture barrier properties, a related method of making the multi-layer sheet structure, and containers formed from the multi-layer sheet structure.
US 2007/184220 discloses biodegradable laminates including biodegradable polymers having oxygen and moisture barrier properties.
US 2004/106719 discloses a nanocomposite blend composition comprising a polyolefin resin; one or more nanocomposites having barrier properties, selected from an ethylenevinyl alcohol (EVOH)/intercalated clay nanocomposite, a polyamide/intercalated clay nanocomposite, an ionomer/intercalated clay nanocomposite, and a polyvinyl alcohol (PVA)/intercalated clay nanocomposite; and a compatibilizer.
US 2013/143053 discloses a moisture vapor and oxygen transmission resistant flexible film having a polymeric base layer and a barrier layer of discrete particles of a first organic polymer dispersed throughout a matrix of a second organic polymer.

### SUMMARY

The present disclosure is generally directed to a composite film including a composite blend layer including a water-soluble synthetic thermoplastic polymer and blocking particles, wherein the blocking particles are nanoclay particles or talc particles; a polyolefin film layer in facing relationship with the composite blend layer; and a polyolefin inner layer; wherein the composite film is free of compatibilizers, and wherein the composite blend layer is disposed between the polyolefin inner layer and the polyolefin film layer.

The present disclosure is also directed to a laminate film consisting a first layer which is a composite blend layer including polyvinyl alcohol (PVOH) and blocking particles, wherein the blocking particles are nanoclay particles or talc particles; a second layer which is a polyolefin film layer in facing relationship with the composite blend layer; and a polyolefin inner layer in facing relationship with the composite blend layer; wherein the composite blend layer is disposed between the polyolefin inner layer and the second layer, and wherein the laminate is free of compatibilizers.

The present disclosure is also directed to a solvent-resistant glove including a composite film, the composite film including a composite blend layer including PVOH and blocking particles, wherein the blocking particles are nanoclay particles or talc particles; a polyolefin film layer in facing relationship with the composite blend layer to form a laminate film; and a polyolefin inner layer; wherein the composite blend layer is disposed between the polyolefin inner layer and the polyolefin film layer to form a film laminate, and wherein the laminate film is free of compatibilizers.

Other features and aspects of the present disclosure are discussed in greater detail herein.

### BRIEF DESCRIPTION OF THE DRAWINGS

The present disclosure will be more fully understood, and further features will become apparent, when reference is made to the following detailed description and the accompanying drawings. The drawings are merely representative and are not intended to limit the scope of the claims.
Figure 1 is a perspective view of one aspect of a glove made according to the present disclosure; and
Figure 2 is a cutaway cross-section view of the glove of Fig. 1, taken along the 2-2 line of Fig. 1, including optional inner and outer layers.

Repeat use of reference characters in the present specification and drawings is intended to represent the same or analogous features or elements of the present disclosure. The drawings are representational and are not necessarily drawn to scale. Certain proportions thereof might be exaggerated, while others might be minimized.

### DETAILED DESCRIPTION

It is to be understood by one of ordinary skill in the art that the present discussion is a description of exemplary aspects only, and is not intended as limiting the broader aspects of the present disclosure.

The present disclosure is generally directed to an article that includes a chemical protection layer that will not substantially dissolve and will reduce the rate of permeation of solvent vapor therethrough when contacted with certain chemicals or solvents.

Any of a variety of articles can be provided with improved chemical resistance properties in accordance with the present disclosure. For example, gloves, medical devices, containers, liners, and the like, can be formed according to the present disclosure. In addition, it should also be understood that other types of articles can also be formed according to the present disclosure.

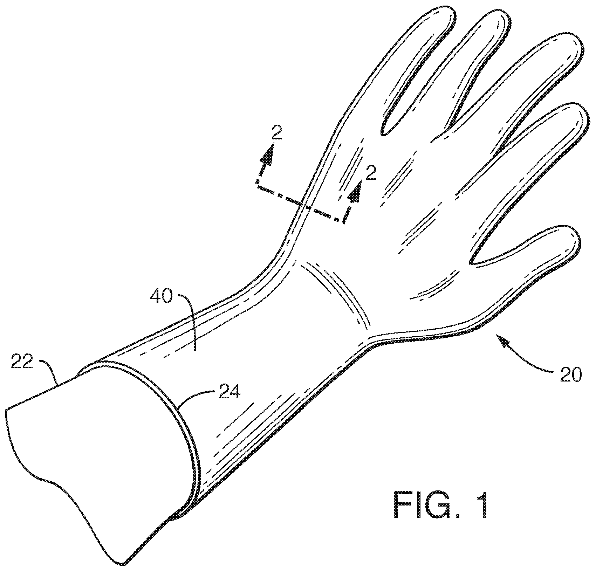

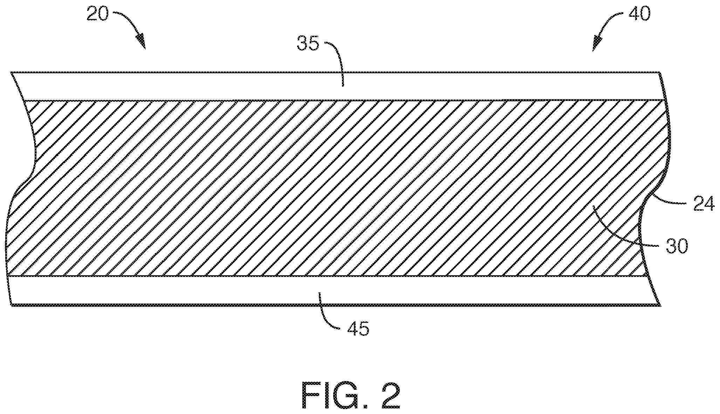

Referring to Figs. 1 and 2, for example, one aspect of the present disclosure is a glove 20 that can be placed on the hand of a user 22. The glove 20 includes a composite film 24 having the basic shape of the glove. The composite film 24 can generally be formed from any of the materials described herein.

There is a need in industries such as the aviation industry for hand protection against harsh solvents such as MEK (methyl ethyl ketone), MPK (methyl propyl ketone), SKYDROL aviation hydraulic fluid, trichloroethane, citrus cleaner degreaser, naphtha solvent, and oil and grease cleaners that do not compromise comfort, productivity, and do not add significant cost. Specific areas of focus can be on engines, fuel lines, and paint process use of solvents. Various methods of working with ketone type solvents are currently employed that might not be optimal. Methods include: (1) wearing a cotton glove with a nitrile glove over it requires changing the nitrile gloves every 30 minutes because the nitrile glove is not made to hold out ketones; (2) not wearing gloves because a user is not aware of the chronic hazards of the solvents, and acute hazards might not be severe; (3) wearing a PVOH (polyvinyl alcohol)-supported glove that is expensive (~$US 36/pair) and has poor dexterity; (4) wearing an all-purpose chemical glove that is film based but not very dexterous.

The concept described herein provides the protection of bulky PVOH gloves with the dexterity of a thin mil glove. End users can wear their gloves longer to stay at their tasks until completion. The users can be more efficient in their tasks without having to change gloves multiple times and be exposed to chemicals. Value is captured by improving productivity and reducing exposure to hazards.

Polyvinyl alcohol is resistant to MEK, for example, if the film is thick enough, on the order of 8 mils (200 µm). The problem, however, is that a thick glove does not provide the needed dexterity. In addition, PVOH is soluble in water and softens upon contact with water. In one exemplary aspect, the addition of nanoclay particles in the 10-15 µm particle size range can reduce the transmission of MEK through the polyvinyl alcohol film at significantly lower thickness (1-3 mils (25-76 µm)). The addition of nanoclay particles allows the thickness of the PVOH film to be reduced and therefore make for a more dexterous glove. The time of MEK breakthrough can be controlled through the amount of nanoclay and the thickness of the final film. It is important to note that this improvement in resistance does not require the use of a compatibilizer in the composite.

The water-dispersible, thermoplastic composition includes one or more polymers containing a repeating unit having a functional hydroxyl group, such as polyvinyl alcohol ("PVOH"). Vinyl alcohol polymers, for instance, have at least two or more vinyl alcohol units in the molecule and may be a homopolymer of vinyl alcohol, or a copolymer containing other monomer units. Vinyl alcohol homopolymers may be obtained by hydrolysis of a vinyl ester polymer, such as vinyl formate, vinyl acetate, vinyl propionate, etc. Vinyl alcohol copolymers may be obtained by hydrolysis of a copolymer of a vinyl ester with an olefin having 2 to 30 carbon atoms, such as ethylene, propylene, 1-butene, etc.; an unsaturated carboxylic acid having 3 to 30 carbon atoms, such as acrylic acid, methacrylic acid, crotonic acid, maleic acid, fumaric acid, etc., or an ester, salt, anhydride or amide thereof; an unsaturated nitrile having 3 to 30 carbon atoms, such as acrylonitrile, methacrylonitrile, etc.; a vinyl ether having 3 to 30 carbon atoms, such as methyl vinyl ether, ethyl vinyl ether, etc.; and so forth. The degree of hydrolysis may be selected to optimize solubility, etc., of the polymer. For example, the degree of hydrolysis may be from about 60 mole% to about 95 mole%, in some embodiments from about 80 mole% to about 90 mole%, and in some embodiments, from about 85 mole% to about 89 mole%, and in some embodiments from about 87 mole% to about 89 mole%. These partially hydrolyzed polyvinyl alcohols are cold water soluble. In contrast, the completely hydrolyzed or nearly hydrolyzed polyvinyl alcohols are not soluble in cold water.

Nanoclays are particularly suitable for use in the present disclosure. The term "nanoclay" generally refers to nanoparticles of a clay material (a naturally occurring mineral, an organically modified mineral, or a synthetic nanomaterial). The clay material typically has a flake-like morphology in that it possesses a relatively flat or platelet shape. The clay platelets may, for example, have an average thickness of from about 0.2 to about 100 nanometers, in some embodiments from about 0.5 to about 50 nanometers, and in some embodiments, from about 1 to about 20 nanometers. The "aspect ratio" of the clay material (i.e., the average length of the platelets divided by the average thickness) is also relatively large, such as from about 20 to about 1000, in some embodiments from about 50 to about 80, in some embodiments, from about 100 to about 400. The average length (e.g., diameter) may, for instance, range from about 20 nanometers to about 10 micrometers, in some embodiments from about 100 nanometers to about 5 micrometers, and in some embodiments, from about 200 nanometers to about 4 micrometers.

The nanoclay material may be formed from a phyllosilicate, such as a smectite clay mineral (e.g., bentonite, kaolinite, or montmorillonite, as well as salts thereof, such as sodium montmorillonite, magnesium montmorillonite, calcium montmorillonite, etc.); nontronite; beidellite; volkonskoite; hectorite; saponite; sauconite; sobockite; stevensite; svinfordite; vermiculite; etc. Other useful nanoclays include micaceous minerals (e.g., illite) and mixed illite/smectite minerals, such as rectorite, tarosovite, ledikite and admixtures of illites with the clay minerals named above. Particularly suitable are montmorillonite (2:1 layered smectite clay structure), bentonite (aluminum phyllosilicate formed primarily of montmorillonite), kaolinite (1:1 aluminosilicate having a platy structure and empirical formula of Al₂Si₂O₅(OH)₄), halloysite (1:1 aluminosilicate having a tubular structure and empirical formula of Al₂Si₂O₅(OH)₄), etc.

A solvent-resistant article 20 of the present disclosure includes a composite film 24. The composite film 24 includes a water-soluble synthetic thermoplastic polymer and blocking particles 30, where the blocking particles 30 can be nanoclay, talc, or both. The water-soluble synthetic thermoplastic polymer can be PVOH, which can be partially hydrolyzed, fully hydrolyzed, or a blend of both. The composite film 24 is free of compatibilizers.

The blocking particles 30 in the composite film 24 can be nanoclay particles, talc particles, or both. Nanoclay particles can be of any suitable size, and preferably have a particle size of 10 to 15 microns. Talc particles can be of any suitable size, and preferably have a particle size of 3 to 10 microns.

To increase the water resistance of the composite film 24, a polyolefin film layer can be added as an outer layer 35 in facing relationship with the composite film 24 to form a film laminate 40, as illustrated in Fig. 2. The outer layer 35 is an optional addition to the composite film 24. Increasing the water resistance is particularly important if the composite film 24 is to be used in articles such as gloves. A multilayered approach can include two or more layers. An outer layer 35 can be a polyolefin such as polypropylene or polyethylene to provide some solvent resistance, but primarily providing a barrier for water, protecting the water-soluble PVOH composite film 24. The outer layer 35 protects the composite film 24 described herein. An inner layer 45 can be a polyolefin, such as polyethylene or a thermoplastic polyurethane. This inner layer 45 can also include additives to promote ease of donning. The inner layer 45 protects the composite film 24 from water, such as from perspiration.

These inner and outer layers 45, 35 can be added to the composite film 24 with or without the use of tie layers. Using inner and outer layers 45, 35 can create separate benefits to either side of the composite film 24, particularly if the film laminate 40 is formed into an article 20 such as a glove. The inner layer 45 can be prepared to provide improved donning characteristics and/or benefits with the incorporation of donning aid, lubricants, etc. without affecting the solvent resistance. The outer layer 35 can be adjusted for the required grip and antiblocking properties. The outer layer 35 can also be varied to provide protection from aqueous solutions or chemicals as well as to improve resistance to chemicals and chemical vapors to which PVOH is permeable.

The inner layer 45, when tailored for donning, can be a low density polyethylene, polyolefin, or thermoplastic polyurethane that provides the required coefficient of friction to allow for easy donning by the user. The inner layer 45 also prevents hand perspiration from reaching and affecting the PVOH in the composite film 24. The inner layer 40 can also include suitable additives to promote donning. The glove 20 can have an interior surface having an interior surface additive such as a slip agent, calcium carbonate, or talc.

The outer layer 35 can be a low crystallinity polypropylene, polyethylene, or polyolefin that both provides resistance to ketones and protects the inner polyvinyl alcohol from aqueous environments. The material of the outer layer 35 can also be elastic to provide good fit and dexterity. The outer layer 35 can include one or more of an embossed surface, calcium carbonate, and talc.

The composite film 24 or the multilayered laminate film 40 can be produced by sheet extrusion, blown film extrusion, or by any other suitable method. To form an article 20 such as a glove, two sheets of the composite film 24 or the laminate film 40 can be simultaneously seamed and cut to shape. In various aspects, the article 20 can be manufactured by any suitable process, including that described in U.S. Patent Publication No. US 2013/0104286. This provides a thin mil glove with good dexterity that is resistant to aqueous solutions as well as harsh solvents and be produced at a low cost.

Although a batch process is described and shown herein, it should be understood that semi-batch and continuous processes can also be used in the present disclosure.

Although various constructions and techniques for forming articles 20 have been described above, it should be understood that the present disclosure is not limited to any particular construction or technique for forming the article 20. For example, the layers described above might not be used in all instances. Additionally, other layers not specifically referred to above can be used in the present disclosure. Furthermore, the present disclosure is also not limited to any particular type of article 20. For instance, flexible automotive hoses and the like can all be formed in accordance with the present disclosure with improved chemical resistance.

The present disclosure might be better understood with reference to the following examples.

### EXAMPLES

### Materials:

1. Polyvinyl Alcohol: SELVOL 205 partially-hydrolyzed polyvinyl alcohol (PVOH) from Sekisui, Dallas, TX
2. Polyvinyl Alcohol: SELVOL 107 fully-hydrolyzed PVOH from Sekisui, Dallas, TX
3. NANOMAX polyolefin masterbatch: polypropylene (PP) and low density polyethylene (LDPE) from Nanocor, Hoffman Estates, IL
4. Clay particles: NANOMER I.34TCN clay particles from Nanocor, Hoffman Estates, IL
5. Talc particles: JETFIL P500 talc particles from IMERYS Talc, San Jose, CA
6. Glycerin: plasticizer from Cognis Corporation, Cincinnati, OH

### Masterbatch Compounding:

In general, formulated masterbatch resins were produced on a ZSK-30 co-rotating twin screw extruder with 7 heated sections and a resin compounding screw design. Resins were produced at a rate of 20 pounds per hour (2.5 g/s). Powder or pellet resin was fed through the main feed section. Glycerin was injected in section 3. Nanoclay or talc powder was side fed into section 4 of the extruder. The temperature profile per section, beginning at the main feed section was 90°, 160°, 190°, 195°, 190°, 180°, and 180°C. The melt pressure ranged between 30-50 psi (210-340 kPa) with the extruder torque of between 35 to 45%. The extruded polymer was brown in color with nanoclay and white in color with talc. Both materials flowed well from the die. The strands were air cooled and pelletized.

### Resin Compounding and Film Formation:

Small scale compounded blends were produced on a 16 mm Prism co-rotating twin screw extruder with 10 heated sections and a resin compounding screw design. Resins were produced at a rate of 2 pounds per hour (0.25 g/s). All resin formulations discussed here were dry blended prior to feeding through the main feed section using a single feeder. The temperature profile per section, beginning at the main feed section were 90°, 160°, 170°, 180°, 180°,190°, 190°, 190°, 180°, 180°, and 180°. Screw speed was held constant at 200 rpm for all resins. The melt pressure ranged between 10-30 psi (70-210 kPa) with the extruder torque of between 30 to 60%. The extruded polymer was fed into an eight-inch film die with the die gap set at 0.02 inches (0.5 mm). The resulting thin film was collected with the chill roll set at 10°C and a take-up speed of 350 that resulted in a film thickness of between 2 and 3 mils (0.002 to 0.003 inches) (51 to 76 µm).

A Haake Rheomex single screw extruder was used to produce mono-layer films for testing properties of formulated resins. The cast films were made using a temperature profile of 180°C, 210°C, 210°C, to 185°C at the die. The screw speed was 60 rpm. To produce a 1 mil (25 µm) film the chill roll speed was set between 250 and 280 rpm.

### Permeation Testing:

Testing was performed according to EN 374-3:2003 by SGS India Pvt. Ltd. In addition, a simple test for permeation of a substance through a glove material is called a swell test. In this test, a pre-weighed piece of test material is placed in the solvent of interest for a given length of time. The material is then removed from the test solvent, blotted dry, and weighed. This test was used to screen possible film candidates.

Samples were made with polyvinyl alcohol (PVOH) and up to 15% clay. The sample with 15% clay in a 0.063 mm thick film had methyl ethyl ketone (MEK) solvent resistance performance similar to a PVOH film (no clay) that was 0.263 mm thick. Some samples have been made with polyethylene and polypropylene, but at lower levels of clay addition. These also performed better than control samples, but not as well as with PVOH. PVOH-nanoclay composite films were tested against target chemicals used in the aviation industry. Results are presented in Table 1 for laminate film that was plasticized PVOH with 15% nanoclay.

**Table 1: PVOH-Nanoclay Film Resistance to Various Solvents**

| **Test Solvent** | **EN 374-3:2003 - MEK** | | | | |
|---|---|---|---|---|---|
| | **Thickness** | **Break Through** | **Permeation** | | **Notes Swollen** |
| | **mm** | **min** | **µg/cm²/min** | **Class** | |
| MEK | 0.06 | >480 | <1 | 6 | None |
| Skydrol | 0.08 | >480 | ND | 6 | None |
| Isopropyl Alcohol | 0.08 | 21 | ND | 1 | Slightly |
| Diestone DLS | 0.08 | 36 | ND | 2 | Slightly |
| Trichloroethylene | 0.08 | >480 | ND | 6 | None |
| Acetone | 0.08 | 4 | ND | 0 | Slightly |
| Frekote | 0.08 | 6 | ND | 0 | Slightly |
| Xylene | 0.08 | >480 | ND | 6 | None |
| Paint Thinner | 0.08 | 4 | ND | 0 | Slightly |
| MPK | 0.08 | >480 | ND | 6 | None |

Results are presented in Table 2 for permeation through laminate film that was plasticized PVOH with varying levels of nanoclay.

**Table 2: MEK Permeation in Nanoclay-PVOH Composites**

| **Material** | **EN 374-3:2003** | | | | | | |
|---|---|---|---|---|---|---|---|
| | **Thickness** | | **Break Through Time** | | **Permeation Rate** | **Performance** | **Notes** |
| | **mm** | | **Min** | | **Steady State Rate** | **Level** | |
| | **Avg** | **sd** | **Avg** | **sd** | **µg/cm²/min** | **Class** | |
| **KCD 1301 0% Clay** | 0.263 | 0.012 | >480 | | < 1 | Class 6 | No Change |
| | | | | | | | |
| **KCD 1301 5% Clay** | 0.067 | 0.006 | 65 | 3 | 39 | Class 3 | Slightly Swollen |
| | | | | | | | |
| **KCD 1301 10% Clay** | 0.063 | 0.006 | 79 | 1 | 24 | Class 3 | Slightly Swollen |
| | | | | | | | |
| **KCD 1301 15% Clay** | 0.063 | 0.006 | >480 | | < 1 | Class 6 | No Change |
| | | | | | | | |

As demonstrated in Table 3, talc showed the same improvement in resistance for PVOH film as nanoclay. Doubling film thickness improved breakthrough time from 8 minutes to greater than 480 minutes. The addition of talc improved MEK resistance in polyolefin and TPE films, but not to the same degree as in PVOH films.

**Table 3: MEK Permeation in Talc Fortified Films**

| **Material** | **EN 374-3:2003 - MEK** | | | | |
|---|---|---|---|---|---|
| | **Thickness** | **Break Through** | **Permeation** | | **Film Appearance (Degree Swollen)** |
| | **mm** | **min** | **µg/cm²/min** | **Class** | |
| PVOH alone | 0.26 | >480 | <1 | 6 | None |
| PVOH - 15% Talc | 0.04 | 8 | ND | 0 | Slightly |
| PVOH - 15% Talc | 0.10 | >480 | ND | 6 | Slightly |

### Conclusion:

PVOH with nanoclay exceeded the permeation standard on 5 of the 10 chemicals tested. PVOH with talc further improved the breakthrough time against acetone from 4 minutes to 338 minutes and was rated as Class-5 glove for acetone. The addition of nanoclay or talc improves the solvent resistance of PVOH films. With the addition of 15% of nanoclay or talc, the thickness of PVOH films can be reduced to less than 0.08 mm for nanoclay and to 0.1 mm for talc and have the same resistance as a 0.26 mm PVOH film without additives.

The theory behind this disclosure is that the nanoclay and/or talc particles are providing a torturous path for the solvent vapors, making it difficult for the solvent vapors to pass through the thinner film barrier.

The addition of nanoclay and/or talc particles does not require the inclusion of a compatibilizer to defoliate the particles to achieve the desired resistance to MEK vapor breakthrough.

Further improvement can be accomplished by using the PVOH as the core layer of a multilayered film structure. This technology can be applied to other polyolefins and thermoplastic elastomers, although higher levels of additive or thicker films might be required to achieve equivalent results to PVOH composite films.

The ability of an article to be imparted with chemical resistance in accordance with the present disclosure was demonstrated.

These and other modifications and variations to the present disclosure can be practiced by those of ordinary skill in the art, without departing from the spirit and scope of the present disclosure, which is more particularly set forth in the appended claims. In addition, it should be understood that elements of the various aspects can be interchanged both in whole and in part. Furthermore, those of ordinary skill in the art will appreciate that the foregoing description is by way of example only, and is not intended to limit the disclosure so further described in such appended claims.

## Claims

1. A composite film comprising:
a composite blend layer including a water-soluble synthetic thermoplastic polymer and blocking particles, wherein the blocking particles are nanoclay particles or talc particles;
a polyolefin film layer in facing relationship with the composite blend layer; and
a polyolefin inner layer;
wherein the composite film is free of compatibilizers;
and wherein the composite blend layer is disposed between the polyolefin inner layer and the polyolefin film layer.

2. The composite film of claim 1, wherein the water-soluble synthetic thermoplastic polymer is polyvinyl alcohol (PVOH), and wherein the PVOH is partially hydrolyzed, fully hydrolyzed, or a blend of both.

3. The composite film of claim 1, wherein the nanoclay particles or talc particles are nanoclay particles.

4. The composite film of claim 3, wherein the nanoclay particles have an average thickness of from 0.2 to 100 nanometers and/or an average length of from 20 nanometers to 10 micrometers, and wherein the average length divided by the average thickness is from 20 to 1000.

5. The composite film of claim 1, wherein the nanoclay particles or talc particles are talc particles, wherein the talc particles preferably have a particle size between 3 and 10 microns.

6. The composite film of claim 1, wherein the nanoclay particles or talc particles are nanoclay particles and talc particles.

7. The composite film of claim 1, wherein the polyolefin inner layer is polyethylene.

8. A laminate film consisting of:
a first layer which is a composite blend layer including polyvinyl alcohol (PVOH) and blocking particles, wherein the blocking particles are nanoclay particles or talc particles;
a second layer which is a polyolefin film layer in facing relationship with the composite blend layer; and
a polyolefin inner layer in facing relationship with the composite blend layer, wherein the composite blend layer is disposed between the polyolefin inner layer and the second layer; and
wherein the laminate is free of compatibilizers.

9. A solvent-resistant glove comprising:
a composite film, the composite film comprising:
a composite blend layer including PVOH and blocking particles, wherein the blocking particles are nanoclay particles or talc particles;
a polyolefin film layer in facing relationship with the composite blend layer to form a laminate film; and
a polyolefin inner layer;
wherein the composite blend layer is disposed between the polyolefin inner layer and the polyolefin film layer to form a film laminate,
wherein the laminate film is free of compatibilizers.

10. The glove of claim 9, further comprising a polyolefin film layer additive to improve grip.

11. The glove of claim 9, wherein the polyolefin film layer includes one or more of an embossed surface, calcium carbonate, and talc.

12. The glove of claim 9, the glove having an interior surface comprising an interior surface additive to improve donning.

13. The glove of claim 12, wherein the interior surface additive is one or more of a slip agent, calcium carbonate, and talc.

## Patentansprüche

1. Verbundfolie, umfassend:
eine Verbundmischungsschicht, beinhaltend ein wasserlösliches synthetisches thermoplastisches Polymer und blockierende Partikel, wobei die blockierenden Partikel Nanotonpartikel oder Talkpartikel sind;
eine Polyolefin-Folienschicht in gegenüberliegender Beziehung zu der Verbundmischungsschicht; und
eine Polyolefin-Innenschicht;
wobei die Verbundfolie frei von Kompatibilisatoren ist;
und wobei die Verbundmischungsschicht zwischen der Polyolefin-Innenschicht und der Polyolefin-Folienschicht angeordnet ist.

2. Verbundfolie nach Anspruch 1, wobei das wasserlösliche synthetische thermoplastische Polymer Polyvinylalkohol (PVOH) ist und wobei das PVOH teilweise hydrolysiert, vollständig hydrolysiert oder eine Mischung aus beidem ist.

3. Verbundfolie nach Anspruch 1, wobei die Nanotonpartikel oder Talkpartikel Nanotonpartikel sind.

4. Verbundfolie nach Anspruch 3, wobei die Nanotonpartikel eine durchschnittliche Stärke von 0,2 bis 100 Nanometer und/oder eine durchschnittliche Länge von 20 Nanometer bis 10 Mikrometer aufweisen, und wobei die durchschnittliche Länge geteilt durch die durchschnittliche Stärke 20 bis 1000 beträgt.

5. Verbundfolie nach Anspruch 1, wobei die Nanotonpartikel oder Talkpartikel Talkpartikel sind, wobei die Talkpartikel bevorzugt eine Partikelgröße zwischen 3 und 10 Mikrometer aufweisen.

6. Verbundfolie nach Anspruch 1, wobei die Nanotonpartikel oder Talkpartikel Nanotonpartikel und Talkpartikel sind.

7. Verbundfolie nach Anspruch 1, wobei die Polyolefin-Innenschicht aus Polyethylen besteht.

8. Laminatfolie, bestehend aus:
einer ersten Schicht, die eine Verbundmischungsschicht ist, beinhaltend Polyvinylalkohol (PVOH) und blockierende Partikel, wobei die blockierenden Partikel Nanotonpartikel oder Talkpartikel sind;
einer zweiten Schicht, die eine Polyolefin-Folienschicht in gegenüberliegender Beziehung zu der Verbundmischungsschicht ist; und
einer Polyolefin-Innenschicht in gegenüberliegender Beziehung zu der Verbundmischungsschicht, wobei die Verbundmischungsschicht zwischen der Polyolefin-Innenschicht und der zweiten Schicht angeordnet ist; und
wobei das Laminat frei von Kompatibilisatoren ist.

9. Lösungsmittelbeständiger Handschuh, umfassend:
eine Verbundfolie, wobei die Verbundfolie Folgendes umfasst:
eine Verbundmischungsschicht, beinhaltend PVOH und blockierende Partikel, wobei die blockierenden Partikel Nanotonpartikel oder Talkpartikel sind;
eine Polyolefin-Folienschicht in gegenüberliegender Beziehung zu der Verbundmischungsschicht zur Bildung einer Laminatfolie; und
eine Polyolefin-Innenschicht;
wobei die Verbundmischungsschicht zwischen der Polyolefin-Innenschicht und der Polyolefin-Folienschicht zur Bildung eines Folienlaminats angeordnet ist,
wobei die Laminatfolie frei von Kompatibilisatoren ist.

10. Handschuh nach Anspruch 9, ferner umfassend einen Polyolefin-Folien-Zusatzstoff zur Verbesserung der Griffigkeit.

11. Handschuh nach Anspruch 9, wobei die Polyolefin-Folienschicht eines oder mehrere umfasst von einer geprägten Fläche, Calciumcarbonat und Talk.

12. Handschuh nach Anspruch 9, wobei der Handschuh eine Innenfläche aufweist, die einen Innenflächen-Zusatzstoff zur Verbesserung des Anziehens umfasst.

13. Handschuh nach Anspruch 12, wobei der Innenflächen-Zusatzstoff eines oder mehrere von einem Gleitmittel, Calciumcarbonat und Talk ist.

## Revendications

1. Film composite comprenant :
une couche de mélange composite comportant un polymère thermoplastique synthétique hydrosoluble et des particules de blocage, dans lequel les particules de blocage sont des particules de nanoargile ou des particules de talc ;
une couche de film de polyoléfine en relation de face à face avec la couche de mélange composite ; et
une couche interne de polyoléfine ;
dans lequel le film composite est exempt d'agents de compatibilité ;
et dans lequel la couche de mélange composite est disposée entre la couche interne de polyoléfine et la couche de film de polyoléfine.

2. Film composite selon la revendication 1, dans lequel le polymère thermoplastique synthétique hydrosoluble est le polyalcool vinylique (PVOH), et dans lequel le PVOH est partiellement hydrolysé, totalement hydrolysé, ou un mélange des deux.

3. Film composite selon la revendication 1, dans lequel les particules de nanoargile ou les particules de talc sont des particules de nanoargile.

4. Film composite selon la revendication 3, dans lequel les particules de nanoargile ont une épaisseur moyenne de 0,2 à 100 nanomètres et/ou une longueur moyenne de 20 nanomètres à 10 micromètres, et dans lequel la longueur moyenne divisée par l'épaisseur moyenne est de 20 à 1 000.

5. Film composite selon la revendication 1, dans lequel les particules de nanoargile ou les particules de talc sont des particules de talc, dans lequel les particules de talc ont de préférence une taille de particule comprise entre 3 et 10 microns.

6. Film composite selon la revendication 1, dans lequel les particules de nanoargile ou les particules de talc sont des particules de nanoargile et des particules de talc.

7. Film composite selon la revendication 1, dans lequel la couche interne de polyoléfine est en polyéthylène.

8. Film stratifié constitué par :
une première couche qui est une couche de mélange composite comportant du polyalcool vinylique (PVOH) et des particules de blocage, dans lequel les particules de blocage sont des particules de nanoargile ou des particules de talc ;
une deuxième couche qui est une couche de film de polyoléfine en relation de face à face avec la couche de mélange composite ; et
une couche interne de polyoléfine en relation de face à face avec la couche de mélange composite, dans lequel la couche de mélange composite est disposée entre la couche interne de polyoléfine et la deuxième couche ; et
dans lequel le stratifié est exempt d'agents de compatibilité.

9. Gant résistant aux solvants comprenant :
un film composite, le film composite comprenant :
une couche de mélange composite comprenant du PVOH et des particules de blocage, dans lequel les particules de blocage sont des particules de nanoargile ou des particules de talc ;
une couche de film de polyoléfine en relation de face à face avec la couche de mélange composite pour former un film stratifié ; et
une couche interne de polyoléfine ;
dans lequel la couche de mélange composite est disposée entre la couche interne de polyoléfine et la couche de film de polyoléfine pour former un stratifié en film,
dans lequel le film stratifié est exempt d'agents de comptabilisation.

10. Gant selon la revendication 9, comprenant en outre un additif de couche de film de polyoléfine pour améliorer la prise.

11. Gant selon la revendication 9, dans lequel la couche de film de polyoléfine comporte un ou plusieurs parmi une surface gaufrée, du carbonate de calcium, et du talc.

12. Gant selon la revendication 9, le gant ayant une surface intérieure comprenant un additif de surface intérieure pour améliorer l'enfilage.

13. Gant selon la revendication 12, dans lequel l'additif de surface intérieure est un ou plusieurs parmi un agent glissant, du carbonate de calcium, et du talc.
